Europäisches Patentamt

European Patent Office

Office européen des brevets

(11) Publication number: **0 159 536**
A2

# EUROPEAN PATENT APPLICATION

(21) Application number: 85103221.9

(22) Date of filing: 20.03.85

(51) Int. Cl.⁴: **H 02 G 7/14**

(30) Priority: 06.04.84 IT 2041284

(43) Date of publication of application: 30.10.85
Bulletin 85/44

(84) Designated Contracting States: **AT BE CH DE FR GB LI
LU NL SE**

(71) Applicant: **RIGANTI S.p.A., 1, via Vittorio Veneto,
I-21048 Solbiate Arno (IT)**

(72) Inventor: **Traini, Oscar, 11, Via Monte Bianco,
I-21010 Cardano al Campo (IT)**

(74) Representative: **Ferraiolo, Ruggero, Viale Tunisia, 29,
I-20124 Milano (IT)**

(54) Vibration damper for a conductor of an overhead electric line.

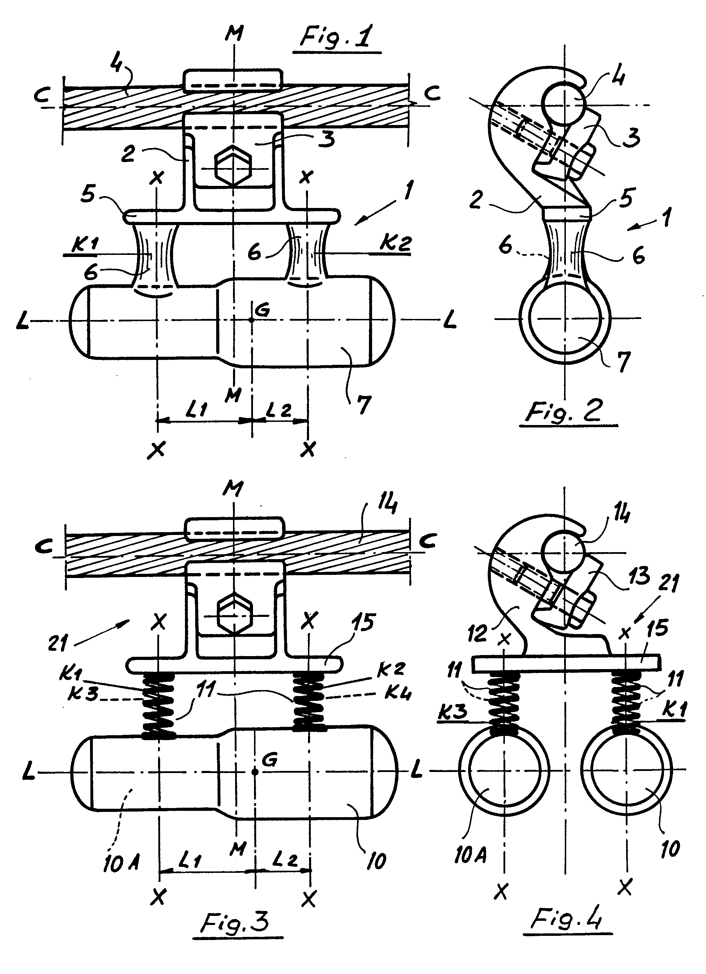

(57) A vibration damper (1) for a conductor (4) of an over-head electric line comprising an element (2) upwardly defin-ing a clamp (3) for clamping a conductor (4) and downwardly defining a base (5) for holding elastic elements (6) carrying weights (7), in which damper (1) each elastic element (6) is so located as to lie with its own main axis (X–X) perpendicular to the axis (C–C) of the relevant conductor (4), has one end fixed to said base and the other end fixed to a weight (7) in order to make elastic vibrations in a direction perpendicular to the axis of the conductor (Fig. 1 is referred to).

- 1 -

Vibration damper for a conductor of an overhead electric line.

This invention concerns a vibration damper for a conductor of an overhead electric line.

For over sixty years, a damper has been in use called the Stockbridge damper, so named after its inventor, consisting of an element upwardly defining a clamp for clamping a conductor and downwardly a base for holding a cable composed of elementary steel wires, which cable lies parallel to the conductor and carries at its two ends, symmetrically placed in relation to the centre line of the clamp , two equal weights. Changes have recently been made to the two weights so that, while those of the original Stockbridge damper vibrate in two ways, in the most recent execution the weights vibrate in four ways. The steel cable constitutes the elastic element which dissipates energy.

Another damper is also known, consisting of weights placed one upon the other, separated by free elastic elements in the form of rubber cushioning pads, the weights and elastic elements having a central hole through which passes a shaft carrying a retainer for the weights at its lower end and a clamp for clamping a conductor at its upper end.

The chief drawbacks to the Stockbridge damper lie in the gradual loss of their initial damping characteristics due both to variation in the coefficient of friction among the elementary wires composing the cable to a point where the device becomes an exciter, and also to fatigue affecting the elementary wires;

further, the cable may break at one end causing the remaining weight to set up torsional stress in the conductor in addition to making the damper completely ineffective. The chief drawbacks to the second type of damper lie in the fact that, being free to move upwards, the weights may damage the conductors due to backlash when, having first received an upward thrust, they fall back onto the retainer.

A drawback common to both the above types of damper is their considerable weight which may even provoke vibration nodes at the points where they are fixed to the conductor causing breakage of the elementary wires forming the conductor.

The aim of the damper according to this present invention is to overcome all the above drawbacks.

The damper conforming to this invention comprises the conventional element upwardly defining a clamp for clamping a conductor and downwardly a base for holding elastic elements carrying weights, and includes a novelty this being that each elastic element is placed so that its main axis lies perpendicular to the axis of the relative conductor, has one end fixed to said base and the other end fixed to a weight in order to make elastic vibrations in a direction perpendicular to the axis of the conductor.

Alternatively the damping element, while still conventionally comprising an element upwardly defining a clamp for clamping a conductor and downwardly a base for holding elastic elements carrying weights, includes a novelty this being that each elastic element takes the form of a cushioning pad of elastomer or neoprene held by one of its surfaces to an element fixed to said base, and held by another surface within a housing of a weight so that each elastic element can make elastic vibrations in a direction perpendicular to the axis of the conductor.

In a first execution of the invention each weight in the damper is oblong in shape with its longitudinal axis substantially parallel to that of the conductor and has its centre of gravity spaced away from the centre line axis of the above clamp, the damper comprising two elastic elements for each weight symmetrically placed in relation to said centre line axis.

In a second particular execution of the invention,each weight in the damper is oblong in shape with its longitudinal axis substantially parallel to the axis of the conductor and has its centre of gravity on the centre line axis of the above clamp, the damper comprising two elastic elements for each weight placed symmetrically in relation to said centre of gravity, along the length of the weight.

In further executions of the invention the two elastic elements possess different stiffness, alternatively identical stiffness ,and each elastic element is a helical steel spring or a cylinder made of elastomer or neoprene one end of which is fixed to the above base and the other end fixed to the corresponding weight.

The chief advantages of the present invention consist in the fact that the damper is lighter than a known equivalent damper, that its performance remains constant over time even under conditions of heavy duty and frequent changes of temperature,that its damping action is effective over the entire range of hazardous frequencies, that it is suitable for dissipating great quantities of energy per cycle, that it cannot be transformed into an exciter, that it absorbs without damage the impacts due to possible backlash in the conductor.

The invention is described in greater detail here below, with the aid of drawings showing some examples of its execution, wherein:

Figs. 1 and 2 respectively represent a side view and a front view of a first damper;

Figs. 3 and 4 respectively represent a side view and a front view of a second damper;

Figs. 5 and 6 respectively represent a side view and a front

- 4 -

view of a third damper;

Fig. 7 represents a side view of a fourth damper.

Figs. 1 and 2 show a damper 1 in which an element 2 upwardly defines a clamp 3 clamped onto a conductor 4 of an electric line, and downwardly defines a base 5 to which are glued by known techniques, the ends of two elastic neoprene elements 6, substantially cylindrical in shape; another end of the elastic elements 6 is glued onto the weight 7 oblong in shape and having its longitudinal axis L-L parallel to the axis C-C of a conductor 4. The centre of gravity G of weight 7 is spaced away from the centre line M-M of the clamp 3, while the main axes X-X of the two elastic elements 6, perpendicular to the axis C-C, are respectively spaced at distances of L1 and L2 from the barycentric axis. Stiffness of each of the elastic elements 6 is respectively K1 and K2 and the expressions $K1 \cdot L1$ and $K2 \cdot L2$ may therefore be the same or different according to the characteristics given to the parts and the value assigned to L1 and L2. Modes of operation will differ in each of the two cases and the damper must be designed for service under the conditions in which the conductor concerned will be situated.

Figs 3 and 4 show a damper 21 comprising two equal weights 10, 10A, with their longitudinal axes L parallel one to the other and to axis C of conductor 14, each one being held by two elastic elements 11 in the form of helical steel springs. Weight 10 is associated to the base 15 by two springs, stiffness of the one being K1 and stiffness of the other K2; weight 10A is associated to the base 15 by two springs, stiffness of the one being K3 and stiffness of the other K4, said four stiffnesses being all different one from another. In this damper too an element 12 upwardly defines a clamp 13, clamped onto the conductor 14, and downwardly defines a base 15 below which the elastic elements 11 are fixed.

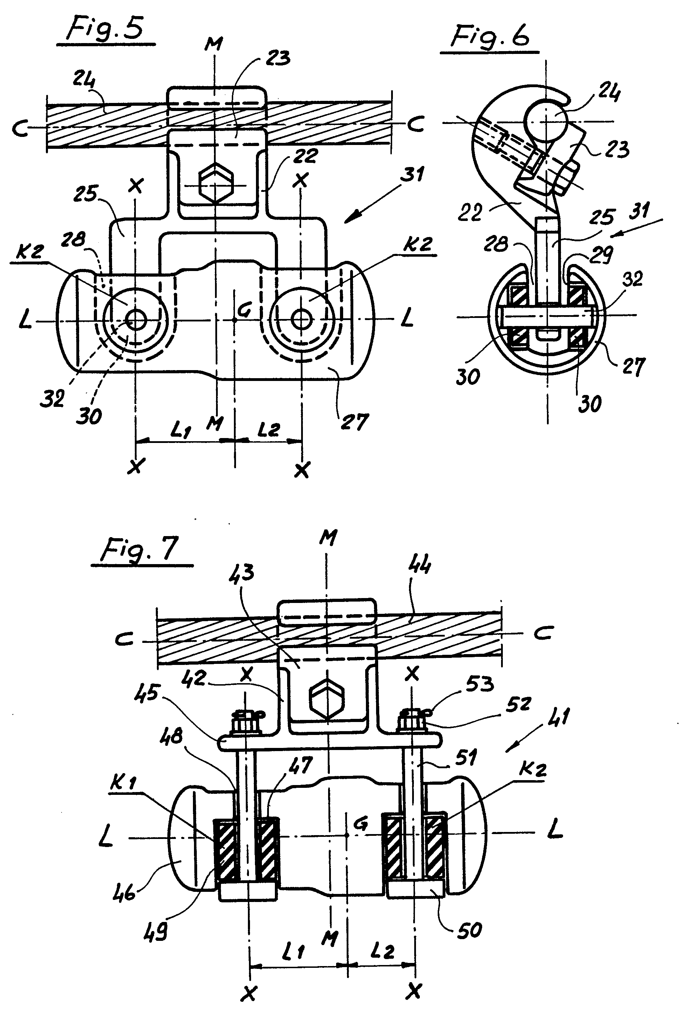

Figs. 5 and 6 show a damper 31 in which an element 22 upwardly defines a clamp 23 clamped onto a conductor 24 and downwardly defines a base 25 shaped like an overturned U; weight
27 comprises two cavities 28 each of which contains two housings 29 enclosing two elastic elements in the form of neoprene
sleeves 30; under slight pressure the pins 32 are forced in-
to the holes in the sleeves 30, each pin fitting into a hole
in one extremity of the base 25. Stiffness K2 is the same for
both the two sleeves 30.

Fig.7 shows a damper 41 in which an element 42 upwardly defines
a clamp 43 clamping a conductor 44 and downwardly defines a
base 45. A weight 46 comprises two cylindrical cavities 47
their vertical axes X-X being equidistant from axis M-M. Each
cylindrical cavity 47 is open at the bottom, has a hole 48 at
the top and receives an elastic element 49,in the form of a
neoprene sleeve held, by the force exercised by weight 46, between the upper surface of the corresponding cylindrical cavity 48 and the head 50 of a shaft 51 passing through the hole
48 and fixed to the base 45 by a nut 52 and a split pin 53.
Stiffness of the two elastic elements is different, one being
K2 and the other K1.

In Figs. 3,4 - 5,6 - 7 the same letters are used as for Figs.
1 and 2 to indicate the various geometrical axes, stiffness of
the elastic elements, centre of gravity of the weights, and
the two distances between the centre of gravity and the axes
X-X.

0159536

- 6 -

Claims

1. Vibration damper (1) for a conductor of an overhead electric line in which an element (2) upwardly defines a clamp (3) for clamping the damper to a conductor (4) and downwardly defines a base (5) for holding elastic elements (6) carrying weights (7), characterized in that each elastic element (6) is so placed as to lie with its own main axis (X-X) perpendicular to the axis (C-C) of the relative conductor (4), has one end fixed to said base (5) and the other end fixed to a weight (7) in order to make elastic vibrations in a direction perpendicular to the axis (C-C) of the conductor (4).

2. Vibration damper (31,41) for a conductor of an overhead electric line in which an element (22,42) upwardly defines a clamp (23,43) for clamping the damper to a conductor (24, 44) and downwardly defines a base (25,45) to hold elastic elements (30,49) carrying weights (27,46), characterized in that each elastic element is a cushion (30,49) made of elastomer or neoprene held by one of its surfaces to an element (32,50) fixed to said base (25,45) and held by another surface within a housing (29,47) in a weight (27,46) in order to make elastic vibrations in a direction perpendicular to the axis (C-C) of the conductor (24,44).

3. Damper (1,31,41) according to claims 1 or 2 characterized in that each weight (7,27,46) is oblong in shape having its longitudinal axis (L-L) substantially parallel to the axis (C-C) of the conductor (4,24,44) and its centre of gravity (G) spaced away from the centre line axis (M-M) of said clamp (3,23,43), and in that it comprises two elastic elements (6,30,49) for each weight placed symmetrically, in relation to said centre line axis (M-M), along the weight (7,27,46).

4. Damper (1,31,41) according to claims 1 or 2 characterized in that each weight (7,27,46) is oblong in shape having its longitudinal axis (L-L) substantially parallel to the axis (C-C) of the conductor (4,24,44) and its centre of gravity (G) on the centre line axis (M-M) of said clamp (3,23,43), and in that it comprises two elastic elements (6,30,49) for each weight (7,27,46) placed symmetrically, in relation to said centre of gravity (G), along the weight.

5. Damper (1,31,41) according to claim 3 characterized in that the two elastic elements (6,30,49) for each weight (7,27,46) possess different stiffnesses.

6. Damper (1,31,41) according to claim 3 characterized in that the two elastic elements (6,30,49) for each weight (7,27,46) possess the same **stiffness**.

7. Damper (1,31,41) according to claim 4 characterized in that the two elastic elements (6,30,49) for each weight (7,27,46) possess different stiffnesses.

8. Damper (21) according to claim 1 characterized in that each elastic element is a helical steel spring (11) with one end fixed to the base (15) and the other end fixed to the corresponding weight (10).

9. Damper (1) according to claim 1 characterized in that each elastic element is a cylinder (6) made of elastomer or neoprene having one end fixed to the above base (5) and the other end fixed to the corresponding weight (7).

10. Damper (41,31) according to claim 2, characterized in that each elastic element is a cushion (49) formed of a single sleeve made of elastomer or neoprene, or a pair of sleeves (30) made of elastomer or neoprene, held by one of its surfaces to an element (50,32) fixed to the above base (45,25) and held by another surface within a housing (47,29) in a weight (46,27).

Fig. 1

Fig. 2

Fig. 3

Fig. 4

0159536

- 2/2 -

Fig.5

Fig.6

Fig.7